# EUROPÄISCHE PATENTSCHRIFT

(11) **EP 0 636 558 B1**
(45) Veröffentlichungstag und Bekanntmachung des Hinweises auf die Patenterteilung: **22.10.1997**
(21) Anmeldenummer: 94111450.6
(22) Anmeldetag: 22.07.1994
(51) Int. Cl.: B65G 13/06, F16H 55/14, B65G 47/29

(54) **Zwischenrolle für den Antrieb der Tragrollen von Staurollenbahnen**
Intermediate roller for driving support rollers of accumulation roller conveyors
Rouleau intermédiaire pour l'entraînement de rouleaux supports sur des transporteurs d'accumulation à galets

(30) Priorität: 28.07.1993 DE 9311269 U
(43) Veröffentlichungstag der Anmeldung: 01.02.1995
(73) Patentinhaber: Gebhardt Fördertechnik GmbH, D-74889 Sinsheim (DE)
(72) Erfinder: Günter, Gebhardt, DE-74915 Waibstadt (DE)
(74) Vertreter: Schmid, Rudolf, Dipl.-Ing., Patentanwalt

(56) Entgegenhaltungen:
- DE-A- 2 650 205
- US-A- 4 328 879
- US-A- 4 416 650

## Beschreibung

Zwischenrollen werden in Staurollenbahnen eingesetzt. Staurollenbahnen selbst sind Förderanlagen, mit sektionsweise angetriebenen Tragrollen, auf denen das Stückgut bewegt wird. Während der Transportbewegung wirken die Stückgüter auf einen in die Förderbahn ragenden Fühler ein, welche Teile der Antriebseinheiten in Eingriff oder Ausgriff mit den Fördermitteln bringt, um die Förderleistung entsprechend den jeweiligen örtlichen Begebenheiten zu manipulieren.

Es gibt dabei Staurollenbahnen, bei denen die Zwischenrolle ein Kettenrad aufweist, das in einer umlaufenden Kette kämmt. Das mit der Tragrolle in Antriebsverbindung bringbare Treibrad kann als Zahnrad ausgebildet sein. Hierdurch entsteht eine zweifache formschlüssige Antriebsübertragung, die einerseits in vorteilhafterweise einen sicheren und zügigen Transport des Stückgutes gewährleistet, andererseits in nachteiligerweise bei Blockieren eines Stückgutes zwangsläufig durchdreht, so daß bei hohem Leistungsaufwand Beschädigungen an der Rollenbahn und/oder am Stückgut auftreten können. Ferner ergeben sich beim Einkuppeln Schwierigkeiten, die Zähne in Eingriff zu bringen, was sich durch harte Schläge bemerkbar macht.

Aus der DE-PS 26 50 205 ist eine Staurollenbahn bekannt, welche derart konzipiert ist, daß beim Anfahren eine weitestgehende Unempfindlichkeit gegen Störungen und gleichzeitig eine hohe konstante Antriebskraftübertragung vorliegt. Hier wird eine Kombination von Rutschkupplung und spezieller Verzahnung eine zuverlässige Überlastsicherung bei ein- und ausrastbarer formschlüssiger Antriebskraftübertragung erreicht.

Gemäß der DE-PS 26 50 205 sieht die Staurollenbahn das Stückgut tragende Tragrollen vor, die von je einer in einem in eine umlaufende Kette eingreifenden Kettenrad ausgestatteten Zwischenrolle angetrieben werden, wobei die Zwischenrolle durch ein mit einem in die Bahn des Stückgutes ragenden Fühlers versehenen Gestänge aus einer Antriebs- in eine Freilaufstellung gestellt wird. Gemäß der Lehre des deutschen Patentes 26 50 205 ist nun vorgesehen, daß die Verbindung zwischen dem Mantel und der von der Zwischenrolle angetriebenen Nabe der Tragrolle in an sich bekannter Weise als Gleitlager und die Antriebsverbindung zwischen der Zwischenrolle und der Tragrolle als abgeflachte Verzahnung ausgebildet ist.

Gemäß einer solchen Staurollenbahn wurden hinsichtlich der Kraftübertragung beste Ergebnisse erreicht.

Hinsichtlich des Anfahrens, d.h. dem Zeitpunkt bei dem die Tragrolle in Rotation versetzt wird, kann es jedoch noch zu "Anfahrschlägen" kommen.

Der vorliegenden Erfindung liegt daher die Aufgabe zugrunde, eine Zwischenrolle zu schaffen, bei der die auftretenden Kräfte beim Anfahren der Anlage bzw. der Rollen gedämpft wird.

Diese Aufgabe wird erfindungsgemäß durch eine Zwischenrolle nach dem vorgeschlagenen Anspruch 1 gelöst.

Besondere Weiterbildungen der Erfindung sind in den Unteransprüchen gekennzeichnet.

Gemäß der vorliegenden Erfindung wird nun von einer Zwischenrolle für den Antrieb der Tragrolle von Staurollenbahnen zum Fördern und drucklosen Stauen von Stückgut ausgegangen, wobei die Zwischenrolle in eine Antriebs- und Freilaufstellung bringbar ist und aus einem Kettenrad und einem Gegenzahnrad zum Eingriff in einen mit der Tragrolle verbundenen Zahnrad besteht und derart ausgebildet ist, daß das die Zwischenrolle bildende Kettenrad und das Gegenzahnrad zweiteilig ausgebildet und koaxial ineinander einsteckbar sind und jeweils miteinander korrespondierende Formschlußelemente aufweisen, die unter Bildung mindestens einer Kammer zur Aufnahme mindestens eines Dämpfungselementes mit einem Verdrehspiel einander zuordenbar sind.

Das Kettenrad und das Gegenzahnrad bilden miteinander ein Gleitlager, wobei beide begrenzt zueinander verdrehbar sind. Die Begrenzung erfolgt durch die vorgenannten Formschlußelemente, die sich ineinander verzahnen, jedoch vor Erreichen eines Formschlusses bzw. vor dem gegenseitigen Anschlagen ein Verdrehen beider Teile, d.h. des Kettenrades und des Gegenzahnrades erlauben. Dies ist dadurch gewährleistet, daß die Formschlußelemente beim Ineinanderstecken des Gegenzahnrades und des Kettenrades nicht sofort aufgrund ihrer geometrischen Ausdehnung in Formschluß kommen, sondern erst bei Verdrehen beider Teile zueinander, was daraus resultiert, daß beide miteinander korrespondierenden Formschlußelemente des Kettenrades und des Gegenzahnrades von ihrer Dicke her kleiner dimensioniert sind, als die gewünschte Verdrehbahnlänge.

Zwischen den Formschlußelementen werden Kammern oder Räume gebildet, die in ihrem Volumen durch Verdrehung des Gegenzahnrades zum Kettenrad reduzierbar oder vergrößerbar sind.

Erfindungsgemäß werden nun in diese Räume Dämpfungselemente eingelegt, die von kompressiblem Wesen sind. Beim Anlaufen der Rollen wird nun durch Verdrehen des Gegenzahnrades zum Kettenrad das Dämpfungselement gepreßt und der sogenannte "Anfahrschlag" genommen, da die auftretenden Kräfte sich auf das Dämpfungselement übertragen und dieses so zu sagen "weich" zusammenpressen, bis letztendlich der Formschluß durch einen Übergang der Einleitungskräfte erreicht ist.

In einem besonderen Ausführungsbeispiel der Erfindung sieht das Kettenrad koaxial zu seiner Achse auf der zum Gegenrand zugewandten Seite einen Lagerbund vor, welcher kreiszylindrisch ausgebildet ist. Der Durchmesser dieses Lagerbundes ist kleiner dimensioniert, als der Durchmesser des Fußkreises des Kettenrades. Die Nabe des Kettenrades ist als Lagerhülse ausgebildet und vom Durchmesser her kleiner dimensioniert als der Durchmesser des Lagerbundes. Nabe und Lagerbund des Kettenrades sind einander koaxial zugeordnet, wobei die Formschlußelemente auf dem Lagerbund konzentrisch um die Achse der Nabe angeordnet sind. Bevorzugterweise sind diese Formschlußelemente als senkrecht zum Kettenrad bzw. Lagerbund angeordnete Stege ausgebildet, wobei deren Oberkante etwas von der Oberkante der Nabe zurückversetzt ist.

Das Kettenrad, der Lagerbund, die Nabe und die Formschlußelemente sind zusammen als einstückiges Kunststoffteil ausgebildet.

Das Gegenzahnrad ist als Hohlkörper ausgebildet und besitzt auf einer Seite eine den Hohlraum freigebende Öffnung, in die das Kettenrad nebst Lagerbund und Formschlußelemente einführbar ist, so daß das Kettenrad und das Gegenzahnrad koaxial ineinander einsetzbar sind.

Die gegenüberliegende Seite des Gegenzahnrades ist mit einer Stirnwand geschlossen und von einer Lagerbohrung durchsetzt, in welcher die Nabe des Kettenrades zu liegen kommt. Innerhalb des Hohlraumes des Gegenzahnrades sind konzentrisch um deren Achse bzw. die Lagerbohrung radial verteilte Formschlußelemente angeordnet, welche bevorzugterweise wiederum als senkrecht zur Stirnwand angeordnete Stege ausgebildet sind. Die Oberkante der Stege ist wiederum von der Oberkante des Gegenzahnrades bzw. von der Öffnung etwas zurückversetzt. Die Innenkanten dieser Formschlußelemente des Gegenzahnrades fluchten mit der Lagerbohrung, so daß diese quasi einen gleichen und identischen Innendurchmesser aufweisen. Auch das Gegenzahnrad mit seinen Formschlußelementen ist als einstückiges Kunststoffteil ausgebildet. Die Innenkanten der Formschlußelemente des Gegenzahnrades dienen als Lagerschalenteile für die Nabe des Kettenrades. Ebenso fungiert der Innendurchmesser des Hohlraumes des Kettenzahnrades als Lagerschale zur Aufnahme des Lagerbundes des Kettenrades sowie den dort angeordneten Formschlußelementen, so daß beide Teile, das Gegenzahnrad und das Kettenrad als Gleitlager miteinander arbeiten, wobei jedoch die Verdrehfreiheit durch die Formschlußelemente begrenzt ist, da diese nach einem begrenzten Verdrehweg aneinander anschlagen bzw. unmittelbar, durch Trennung des Dämpfungselementes formschlüssig aufeinandertreffen.

Anhand der beigefügten Zeichnungen, die ein besonders bevorzugtes Ausführungsbeispiel der Erfindung zeigen, wird diese nun näher beschrieben. Dabei zeigen:
- Figur 1: eine Innenansicht eines die Zwischenrolle aufnehmenden Rahmenprofils;
- Figur 2: einen Schnitt entlang der in Figur 1 angedeuteten Linie A-A;
- Figur 3: die aus dem Rahmenprofil separierte Zwischenrolle in einer Ansicht;
- Figur 4: die Zwischenrolle aus der in Figur 3 angedeuteten Richtung B;
- Figur 5: die Zwischenrolle aus der in Figur 3 angedeutenen Richtung C;
- Figur 6: das Kettenrad;
- Figur 7: einen Schnitt durch das Kettenrad entlang der in Figur 6 angedeuteten Linie D-D;
- Figur 8: das Gegenzahnrad;
- Figur 9: das Gegenzahnrad entlang der in Figur 8 angedeuteten Schnittlinie E-E;
- Figur 10: eine perspektivische Darstellung des Kettenrades;
- Figur 11: eine perspektivische Darstellung des Gegenzahnrades;
- Figur 12: einen Schnitt entlang der in Figur 4 angedeuteten Linie F-F des ineinander greifenden Kettenrades und Gegenzahnrades, welche die Zwischenrolle bilden.
- Figur 13: einen Schnitt entlang der in Figur 12 angedeuteten Linie G-G.

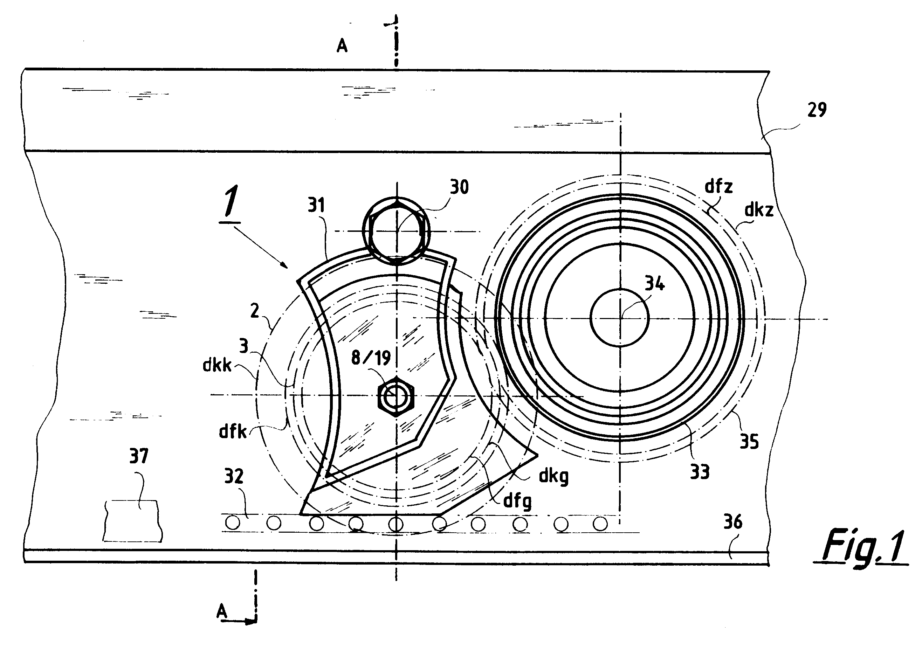

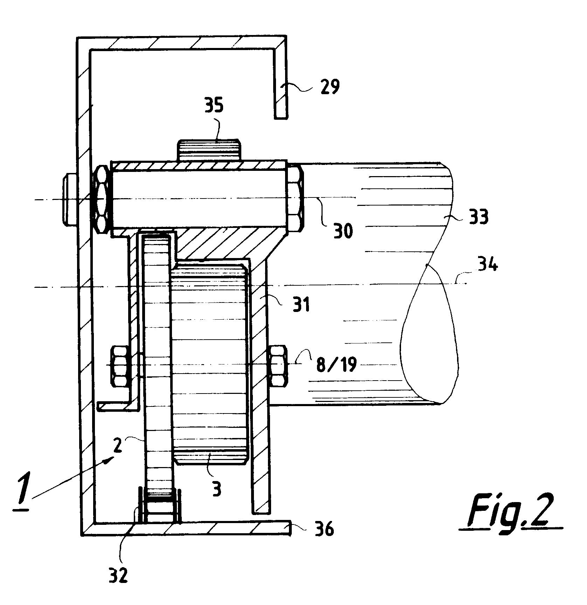

Die Figuren 1 und 2 zeigen die, in einer Staurollenbahn eingesetzte erfindungsgemäße Zwischenrolle 1. Es ist hier ein Rahmenprofil 29 von der Innenseite der Staurollenbahn her abgebildet (Figur 1). Die Staurollenbahn besteht aus zwei parallel zueinander verlaufenden Rahmenprofilen 29 zwischen denen die Tragrollen 33 drehbar angeordnet sind. Hierzu befinden sich die Tragrollen 33 auf einer gemeinsamen Achse 34 jeweils eines Zahnrades 35. Die Achse 34 ist am Rahmenprofil 29 fixiert, wobei Tragrolle 33 und Zahnrad 35 drehbar auf dieser angeordnet sind. Zwischen Tragrolle 33 bzw. Zahnrad 35 und dem unteren Flansch 36 des Rahmenprofiles 29 ist ein ständig umlaufendes Fördermittel, hier eine Kette 32 vorgesehen, in welche das Kettenrad 2 der Zwischenrolle 1 eingreift. Das Kettenrad ist in Figur 1 der Einfachheit halber lediglich mit seinem Kopfkreis "dkk" und seinem Fußkreis "dfk" strichpunktliniert angedeutet.

Ebenso das Gegenzahnrad 3, welches in das Zahnrad 35 in Eingriff bringbar ist. Auch beim Zahnrad 35 wurde der Kopfkreis und der Fußkreis lediglich strichpunktliniert angedeutet.

Die Kopfkreise sind mit den Bezugszeichen "dk" und die Fußkreise mit dem Bezugszeichen "df" gekennzeichnet, wobei zur Unterscheidung des Gegenzahnrades, des Kettenrades und des Zahnrades auf der Tragrolle die Zusatzbezeichnungen "k" für Kettenrad", "g" für Gegenzahnrad und "z" für Zahnrad gewählt wurden.

Somit trägt der Kopfkreisdurchmesser des Kettenrades 2 das Bezugszeichen "dkk", dessen Fußkreisdurchmesser das Bezugszeichen "dfk", der Kopfkreisdurchmesser des Gegenzahnrades 3 das Bezugszeichen "dkg" und dessen Fußkreisdurchmesser das Bezugszeichen "dfg", während der Kopfkreisdurchmesser des Zahnrades 35 das Bezugszeichen "dkz" und dessen Fußkreisdurchmesser das Bezugszeichen "dfz" trägt.

Die Zwischenrolle 1 wird durch das Kettenrad 2 und das Gegenzahnrad 3 gebildet. Die Zwischenrolle 1 ist mit den gemeinsamen Achsen 8 und 19 des Kettenrades 2 und des Gegenzahnrades 3, drehbar innerhalb eines Gehäuses 31 aufgenommen. Das Gehäuse 31 selbst weist wiederum eine Schwenkachse 30 auf, um welche das Gehäuse 31 selbst, sowie die Zwischenrolle 1, d.h. das Kettenrad 2 und das Gegenzahnrad 3 mit ihren Achsen 8 und 19 schwenkbar ist. Über das Stellglied 37, welches über einen hier nicht angedeuteten, in die Förderbahn der Staurollenbahn einragenden Fühler aktiviert wird, und am Gehäuse 31 der Zwischenrolle 1 befestigt ist, wird die Zwischenrolle 1, bzw. das Gegenzahnrad 3 in Eingriff- oder Ausgriffstellung gegenüber dem Zahnrad 35 der Tragrolle 33 gebracht.

Durch diese Konfiguration der Antriebsteile und angetriebenen Teile bleibt das Kettenrad 2 ständig in Eingriff mit der Kette 32.

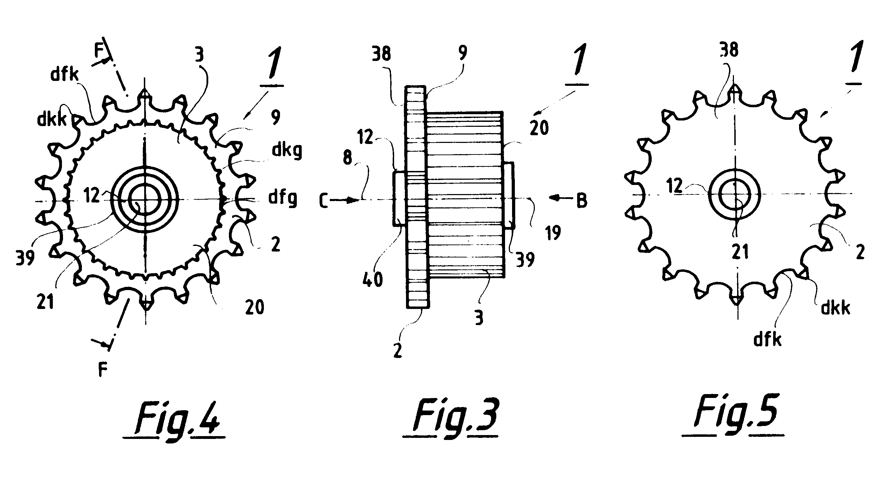

Die Figuren 3, 4 und 5 zeigen die aus dem Rahmenprofil 29 herausgelöste Zwischenrolle 1, wobei die Figur 3 eine Ansicht der Zwischenrolle 1 darstellt gemäß der Figur 2, jedoch ohne Schnittverlauf; die Figur 4 eine Ansicht aus der in Figur 3 angedeuteten Richtung B und die Figur 5 eine Ansicht aus der in Figur 3 angedeuteten Richtung C.

Die Zwischenrolle 1 besteht aus dem Kettenrad 2 und dem Gegenzahnrad 3. Diese sind miteinander zweistückig ausgebildet und ineinander eingesteckt, so daß deren beiden Achsen 8 und 19 koaxial zueinander zu liegen kommen.

Die Nabe 12 des Kettenrades 2 ragt dabei über die Stirnfläche 38 hinaus, um ein verlängertes Lager zu bilden. Aus gleichem Grunde ist die Nabe 12 auf der dem Gegenzahnrad 3 zugewandte Stirnseite 9 verlängert, um als Lagerkörper für das Gegenzahnrad zu fungieren, wobei letzteres an seiner dem Kettenrad 2 weggewandten Stirnseite 20 einen Lagerbund 39 besitzt. Somit steht über die Stirnseite 38 des Kettenrades 2 ein Nabenbundstummel 40 und beim Gegenzahnrad 3 ein solcher mit dem Bezugszeichen 39 gekennzeichnet, über dessen Stirnseite 20 über.

In der Figur 4 ist darüberhinaus erkennbar, daß der Kopfkreis "dkk" des Kettenrades 2 die größte Ausdehnung dieser Zwischenrolle 1 darstellt, während das Gegenzahnrad 3 bzw. dessen Kopfkreisdurchmesser "dkg" unterhalb des Fußkreisdurchmessers "dfk" des Kettenrades 2 zu liegen kommt. Ferner ist aus dieser Abbildung der Lagerbund 39 des Gegenzahnrades 3 und die Nabe 12 des Kettenrades 2 mit ihrer Lagerbohrung 21 zu erkennen.

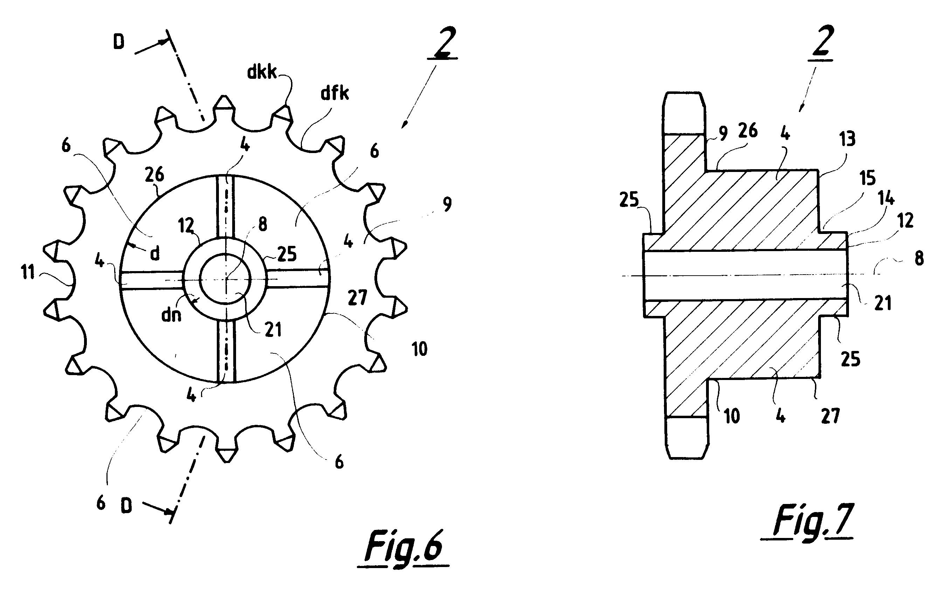

Die Figuren 6 und 7 zeigen das Kettenzahnrad 2. Auf der zum Gegenzahnrad zugewandten Seite 9 des Kettenrades ist ein koaxial zur Achse 8 angeordneter Lagerbund 10 zu erkennen. Der Durchmesser "d" des Lagerbundes ist sichtbar kleiner dimensioniert, als der Durchmesser "dfk" des Fußkreises 11. Die Nabe 12 ist ebenfalls koaxial zur Achse 8 angeordnet und erstreckt sich vom Lagerbund 10 senkrecht. Sie ist als Lagerhülse ausgebildet und weist zu diesem Zwecke eine Nabenbohrung 21 auf. Wie bereits dargelegt, ist der Duchmesser "dn" der Nabe kleiner dimensioniert als der Durchmesser "d" des Lagerbundes 10. Die Außenumfangsfläche 26 sowie die Außenkante 27 der radial auf dem Lagerbund 10 um die Nabe 12 verteilten Formschlußelemente 4 bilden hierbei in Zusammenspiel mit dem Gegenzahnrad entsprechende Gleitlagerelemente. In diesem Ausführungsbeispiel sind die Formschlußelemente 4 als senkrecht zum Kettenrad 2 bzw. Lagerbund 10 angeordnete Stege ausgebildet, wobei zwischen Oberkante 13 des Formschlußelementes 4 und Oberkante 14 der Nabe 12 ein Absatz 15 gebildet ist.

Zwischen den einzelnen Formschlußelementen 4 werden somit Kammern 6 gebildet, auf die später noch näher eingegangen wird.

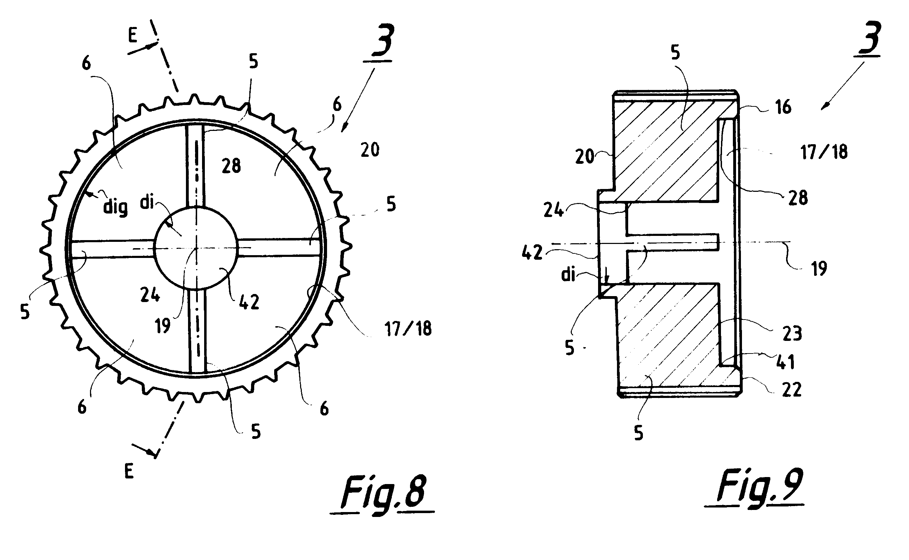

Die Figuren 8 und 9 zeigen ein Ausführungsbeispiel des Gegenzahnrades 3. Hier ist deutlich zu erkennen, daß dieses als Hohlkörper ausgebildet ist. Das Gegenzahnrad 3 besitzt an der zum Kettenrad zugewandten Seite 16 eine den Hohlraum 17 freiliegende Öffnung 18. Konzentrisch um die Achse 19 bzw. um die Lagerbohrung 42 in der Stirnwand 20, sind wiederum als senkrechte Stege ausgebildete Formschlußelemente 5 zu erkennen.

Auch hier werden wieder einzelne Kammern 6 gebildet.

Zwischen der Oberkante 22 des Gegenzahnrades 3 und der Oberkante 23 der Formschlußelemente 5 ist wiederum ein Absatz 41 gebildet. Die Innenkanten 24 des Formschlußelementes 5 fluchten dabei mit dem Innendurchmesser "di" der Lagerbohrung 42. Die Innenumfangsfläche 28 des Gegenzahnrades 3 korrespondieren mit den Außenkanten 27 der Formschlußelemente 4 des Kettenrades 2 und der Außenumfangsfläche 26 des Lagerbundes 10. Die Innenkanten 24 der Formschlußelemente 5 korrespondieren mit der Umfangsfläche 25 der Nabe 12 des Kettenrades 2, so daß ein Gleitlager gebildet ist.

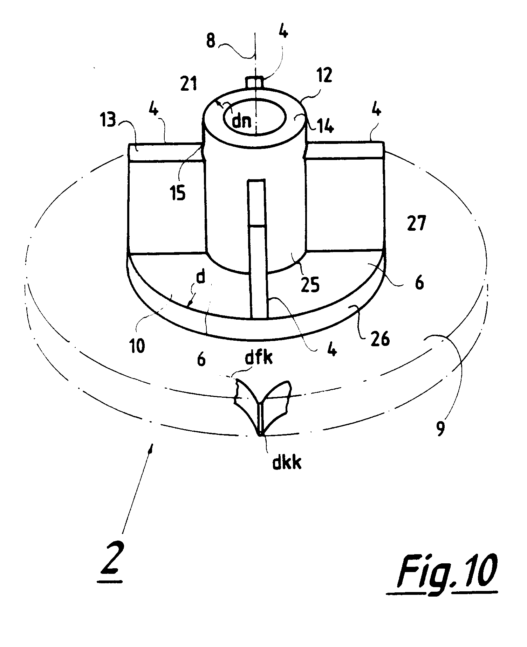

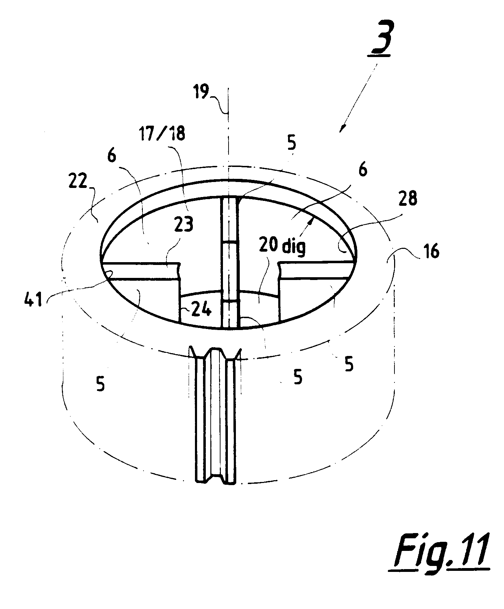

Die Figuren 10 und 11 zeigen perspektivische Darstellung des Kettenrades 2 bzw. des Gegenzahnrades 3, wobei gleiche Elemente mit den gleichen Bezugszeichen gekennzeichnet sind.

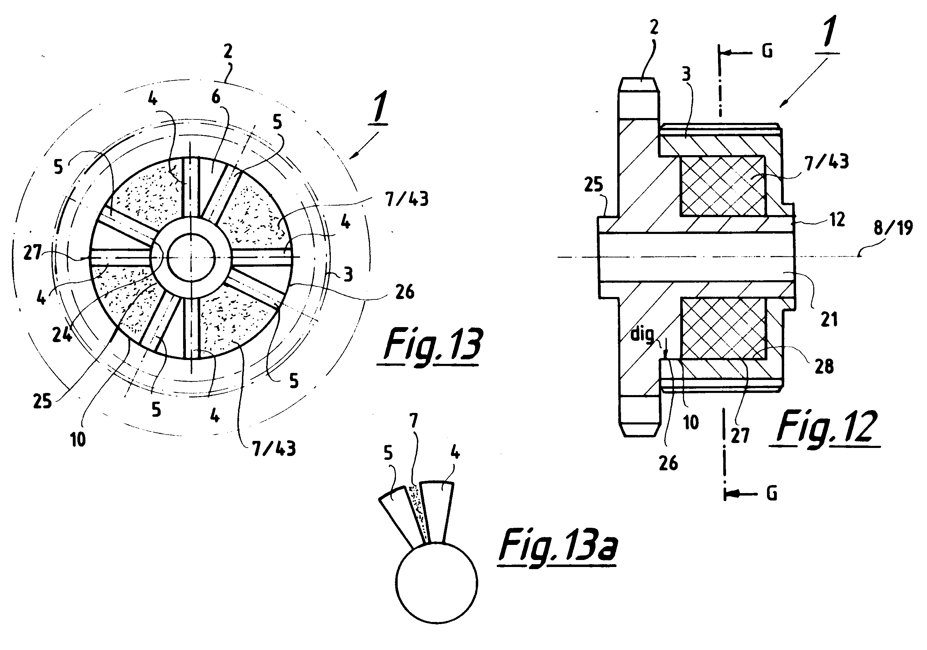

Die Figur 12 zeigt einen Schnitt des zusammengefügten Kettenrades 2 und Gegenzahnrades 3, welche die Zwischenrolle 1 bilden.

Auch hier sind die gleichen Elemente mit den gleichen Bezugszeichen gekennzeichnet, wobei hier zusätzlich das Dämpfungselement mit dem Bezugszeichen 7 gekennzeichnet ist. Das Lageverhältnis und das Verdrehspiel geht nochmals deutlich aus der Figur 13 hervor, welche einen Schnitt entlang der in Figur 12 angedeuteten Linie G-G darstellt.

In zusammengefügtem Stadium des Kettenrades 2 und Gegenzahnrades 3 werden die Kammern 6 durch die Formschlußelemente 4 bzw. 5 nochmals in geeignete Einzelräume 43 unterteilt, in denen das Dämpfungselement 7 eingesetzt wird. In der hier dargestellten Situation liegt keine Pressung des Dämpfungselementes 7 vor, da keine Krafteinleitung erfolgt. Greift das Gegenzahnrad 3 in das Zahnrad 35 der Tragrolle 33 ein, so verdrehen sich die Formschlußelemente 4 bzw. 5 zueinander bis ein entsprechender Formschluß erreicht ist. Ohne Dämpfungselement 7 wäre dies der Anschlag eines Formschlußelementes 5 an das Formschlußelement 4 bzw. das Zusammentreffen deren Sohlenteile. Durch die Anordnung des Dämpfungselementes 7 wird die krafteinleitung hervorragend gedämpft, wobei bereits sofort eine Antriebsbewegung der Teile erfolgt, also keine Verzögerung vorliegt.

Wie in der Figur 13a dargestellt, können die Formschlußelemente 4 bzw. 5 auch von konischer Gestalt sein, um dem Dämpfungselement 7 eine gleichmäßige Pressung zu verleihen.

Mit der vorliegenden Erfindung wird eine Zwischenrolle für den Antrieb der Tragrolle von Staurollenbahnen zum Fördern und drucklosen Stauen von Stückgut geschaffen, die durch die Anordnung eines Dämpfungselementes zwischen den Formschlußelementen der, die Zwischenrolle bildenden Kettenrades und Gegenzahnrades, jegliche Anfahrschläge eliminiert und dabei nahezu keine Antriebsverzögerung besitzt.

### Bezugszeichenliste

- 1: Zwischenrolle
- 2: Kettenrad
- 3: Gegenzahnrad
- 4: Formschlußelement von 2
- 5: Formschlußelement von 3
- 6: Kammer
- 7: Dämpfungselement
- 8: Achse von 2
- 9: Stirnseite von 2
- 10: Lagerbund von 2
- 11: Fußkreis von 2
- 12: Nabe von 2
- 13: Oberkante von 4
- 14: Oberkante von 12
- 15: Absatz zwischen 13 und 14
- 16: Stirnseite von 3
- 17: Hohlraum von 3
- 18: Öffnung von 3
- 19: Achse von 3
- 20: Stirnwand von 3
- 21: Lagerbohrung von 2
- 22: Oberkante von 3
- 23: Oberkante von 5
- 24: Innenkante von 5
- 25: Außenumfangsfläche von 12
- 26: Außenumfangsfläche von 10
- 27: Außenkante von 4
- 28: Innenumfangsfläche von 3
- 29: Rahmenprofil
- 30: Schwenkachse

## Patentansprüche

1. Zwischenrolle (1) für den Antrieb der Tragrollen von Staurollenbahnen zum Fördern und drucklosen Stauen von Stückgut, wobei die Zwischenrolle (1) in eine Antriebs- und Freilaufstellung bringbar ist und aus einem Kettenrad (2) und einem Gegenzahnrad (3) zum Eingriff in ein mit der Tragrolle verbundenes Zahnrad besteht,
dadurch gekennzeichnet,
daß das die Zwischenrolle (1) bildende Kettenrad (2) und das Gegenzahnrad (3) koaxial ineinander einsteckbar sind und jeweils miteinander korrespondierende Formschlußelemente (4,5) aufweisen, die unter Bildung mindestens einer Kammer (6) zur Aufnahme mindestens eines Dämpfungselementes (7) mit einem Verdrehspiel einander zuordenbar sind.

2. Zwischenrolle nach Anspruch 1,
dadurch gekennzeichnet,
daß das Kettenrad (2) koaxial zu seiner Achse (8) auf der zum Gegenrad (3) zugewandten Seite (9) einen Lagerbund (10) aufweist.

3. Zwischenrolle nach Anspruch 2,
dadurch gekennzeichnet,
daß der Lagerbund (10) kreiszylindrisch ausgebildet ist.

4. Zwischenrolle nach mindestens einem der Ansprüche 2 und 3,
dadurch gekennzeichnet,
daß der Durchmesser "d" des Lagerbundes (10) kleiner dimensioniert ist, als der Durchmesser "dfk" des Fußkreises (11) des Kettenrades (2).

5. Zwischenrolle nach mindestens einem der Ansprüche 1 bis 4,
dadurch gekennzeichnet,
daß die Nabe (12) des Kettenrades (2) als Lagerhülse ausgebildet ist.

6. Zwischenrolle nach Anspruch 5,
dadurch gekennzeichnet,
daß der Durchmesser "dn" der Nabe (12) kleiner dimensioniert ist, als der Durchmesser "d" des Lagerbundes (10).

7. Zwischenrolle nach Anspruch 1 bis 6,
dadurch gekennzeichnet,
daß die Nabe (12) und der Lagerbund (10) des Kettenrades (2) koaxial einander zugeordnet sind.

8. Zwischenrolle nach Anspruch 1 bis 7,
dadurch gekennzeichnet,
daß die Formschlußelemente (4) des Kettenrades (2) auf dem Lagerbund (10) konzentrisch um die Achse (8) und die Nabe (12) angeordnet sind.

9. Zwischenrolle nach Anspruch 8,
dadurch gekennzeichnet,
daß die Formschlußelemente (4) als senkrecht zum Kettenrad (2) bzw. Lagerbund (10) angeordnete Stege ausgebildet sind.

10. Zwischenrolle nach Anspruch 8 und 9,
dadurch gekennzeichnet,
daß zwischen Oberkante (13) des Formschlußelementes (4) und Oberkante (14) der Nabe (12) ein Absatz (15) gebildet ist.

11. Zwischenrolle nach Anspruch 1 bis 10,
dadurch gekennzeichnet,
daß als Formschlußelement (4), vier konzentrisch um die Achse (8) bzw. Nabe (12) auf dem Lagerbund (10) radial verteilte Stege angeordnet sind.

12. Zwischenrolle nach Anspruch 1 bis 11,
dadurch gekennzeichnet,
daß das Kettenrad (2), der Lagerbund (10), die Nabe (12) und die Formschlußelemente (4) miteinander einstückig ausgebildet sind.

13. Zwischenrolle nach Anspruch 12,
dadurch gekennzeichnet,
daß das Kettenrad (2), der Lagerbund (10), die Nabe (12) und die Formschlußelemente (4) als einstückiges Kunststoffteil ausgebildet sind.

14. Zwischenrolle nach Anspruch 1,
dadurch gekennzeichnet,
daß das Gegenzahnrad (3) als Hohlkörper ausgebildet ist.

15. Zwischenrolle nach Anspruch 1 und 14,
dadurch gekennzeichnet,
daß das Gegenzahnrad (3) an der zum Kettenrad (2) zugewandten Seite (16), eine den Hohlraum (17) freilegende Öffnung (18) aufweist.

16. Zwischenrolle nach mindestens einem der vorhergehenden Ansprüche,
dadurch gekennzeichnet,
daß das Gegenzahnrad (3) eine koaxial der Achse (8) des Kettenrades (2) zuordenbare Achse (19) aufweist.

17. Zwischenrolle nach Anspruch 1, 14 bis 16,
dadurch gekennzeichnet,
daß die dem Kettenrad (2) weggewandte Stirnwand (20) des Gegenzahnrades (3) von einer Lagerbohrung (42) durchsetzt ist.

18. Zwischenrolle nach Anspruch 1, 14 bis 17,
dadurch gekennzeichnet,
daß innerhalb des Hohlraumes (17) des Gegenzahnrades (3) konzentrisch um die Achse (19) bzw. die Lagerbohrung (42) radial verteilte Formschlußelemente (5) angeordnet sind.

19. Zwischenrolle nach Anspruch 18,
dadurch gekennzeichnet,
daß die Formschlußelemente (5) des Gegenzahnrades (3) als senkrecht zur Stirnwand (20) des Gegenzahnrades (3) angeordnete Stege ausgebildet sind.

20. Zwischenrolle nach Anspruch 18 und 19,
dadurch gekennzeichnet,
daß zwischen Oberkante (22) des Gegenzahnrades (3) und Oberkante (23) der Formschlußelemente (5) ein Absatz (41) vorliegt.

21. Zwischenrolle nach mindestens einem der vorhergehenden Ansprüche,
dadurch gekennzeichnet,
daß die Innenkante (24) des Formschlußelementes (5) mit dem Innendurchmesser "di" der Lagerbohrung (42) des Gegenzahnrades (3) fluchtet.

22. Zwischenrolle nach mindestens einem der vorhergehenden Ansprüche,
dadurch gekennzeichnet,
daß das Gegenzahnrad (3) mit Stirnwand (20) und Formschlußelementen (5) einstückig ausgebildet sind.

23. Zwischenrolle nach Anspruch 22,
dadurch gekennzeichnet,
daß das Gegenzahnrad (3) mit Formschlußelementen (5) und Stirnwand (20) als einstückiges Kunststoffteil ausgebildet ist.

24. Zwischenrolle nach mindestens einem der Ansprüche 1 bis 23,
dadurch gekennzeichnet,
daß als Formschlußelemente (5), vier im Hohlraum (17) des Gegenzahnrades (3) radial verteilte Stege angeordnet sind.

25. Zwischenrolle nach Anspruch 1 bis 24,
dadurch gekennzeichnet,
daß die Nabe (12) des Kettenrades (2) innerhalb der Lagerbohrung (42) des Gegenzahnrades (3) aufgenommen ist.

26. Zwischenrolle nach Anspruch 1 bis 25,
dadurch gekennzeichnet,
daß die Innenkanten (24) der Formschlußelemente (5) des Gegenzahnrades (3) als Lagerschalenteile mit der Außenumfangsfläche (25) der Nabe (12) des Kettenrades (2) korrespondieren.

27. Zwischenrolle nach Anspruch 1 bis 26,
dadurch gekennzeichnet,
daß der Innendurchmesser "dig" des Gegenzahnrades (3) als Lagerschale mit der Außenumfangsfläche (26) des Lagerbundes (10) und den Außenkanten (27) der Formschlußelemente (4) des Kettenrades (2) korrespondieren.

28. Zwischenrolle nach Anspruch 1 bis 27,
dadurch gekennzeichnet,
daß die Innenkanten (24) der Formschlußelemente (5) und die Innenumfangsfläche (28) des Gegenzahnrades (3) mit der Außenkante (27) der Formschlußelemente (4), der Umfangsfläche (26) des Lagerbundes (10) und der Umfangsfläche (25) der Nabe (12) ein Gleitlager bilden.

29. Zwischenrolle nach Anspruch 1 bis 28,
dadurch gekennzeichnet,
daß die Formschlußelemente (5) des Gegenzahnrades (3) und die Formschlußelemente (4) des Kettenrades (2) jeweils in der, zwischen zweier Formschlußteilen (4 oder 5) gebildeten Kammer (6) mit Verdrehspiel zu liegen kommen.

30. Zwischenrolle nach Anspruch 29,
dadurch gekennzeichnet,
daß durch die ineinandergreifenden Formschlußelemente (4 und 5) des Gegenzahnrades (3) und des Kettenrades (2) die Kammern (6) in, zur Aufnahme von Dämpfungselementen (7) geeignete Räume (43) geteilt sind.

31. Zwischenrolle nach Anspruch 1 bis 30,
dadurch gekennzeichnet,
daß das Dämpfungselement (7) aus elastischem Material geschaffen ist.

32. Zwischenrolle nach Anspruch 1 bis 31,
dadurch gekennzeichnet,
daß das Dämpfungsmaterial (7) aus einem kompressiblem Material geschaffen ist.

33. Zwischenrolle nach Anspruch 1 bis 32,
dadurch gekennzeichnet,
daß das die Zwischenrolle (1) bildende Kettenrad (2) und Gegenzahnrad (3) mit ihren Achsen (8 und 19) koaxial angeordnet sind und um eine gemeinsame, am Rahmenprofil (29) der Staurollenbahn angeordneten Achse (30) schwenkbar sind.

34. Zwischenrolle nach Anspruch 33,
dadurch gekennzeichnet,
daß die Zwischenrolle (1) innerhalb eines Gehäuses (31) mit ihrer, durch die koaxial einander zugeordneten Achsen (8 und 19) des Kettenrades (2) und des Gegenzahnrades (3) drehbar gelagert ist und die Achse (30) des Gehäuses (31) schwenkbar aufnimmt.

35. Zwischenrolle nach Anspruch 1 bis 34,
dadurch gekennzeichnet,
daß das Kettenrad (2) ständig im Eingriff mit einer umlaufenden Kette (32) steht.

36. Zwischenrolle nach mindestens einem der Ansprüche 1 bis 35,
dadurch gekennzeichnet,
daß die Funktion der Nabe (12) des Kettenrades (2) als Lagerhülse, durch eine seperate Lagerbuchse ersetzt wird.

## Claims

1. Intermediate wheel (1) as driving wheel for the supporting rollers of accumulation roller conveyors used for the conveyance and pressureless accumulation of mixed parcels, with the intermediate wheel (1) assuming either an engaged driving position or a disengaged idle position, said intermediate wheel (1) being composed of a sprocket wheel (2) and a mating counter-cogwheel (3) designed to engage with a cogwheel connected to the supporting roller,
**wherein**
the sprocket wheel (2) and the mating counter-cogwheel (3), both defining the intermediate wheel (1), can be readily assembled by coaxially inserting one into another, with each of them presenting a positive-coupling element (4,5) the rotational play of which enables their being fit one into another in an interlocking configuration and which are designed to form at least one chamber (6) receiving at least one damping element (7).

2. Intermediate wheel according to claim 1,
**wherein**
the chain wheel (2), on the side (9) facing the counter-cogwheel (3), presents a bearing flange (10) arranged coaxially with regard to its axis (8).

3. Intermediate wheel according to claim 2,
**wherein**
the bearing flange (10) has the shape of a circular cylinder.

4. Intermediate wheel according to at least either of claims 2 and 3,
**wherein**
diameter 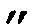 d" of the bearing flange (10) is smaller than diameter 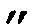 dfk" of the root circle (11) of the chain wheel (2).

5. Intermediate wheel according to at least either of claims 2 to 3,
**wherein**
the hub (12) of the chain wheel (2) assumes the shape of a bearing sleeve.

6. Intermediate wheel according to claim 5,
**wherein**
diameter 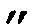 dn" of the hub (12) is smaller than diameter 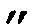 d" of the bearing flange (10).

7. Intermediate wheel according to claims 1 to 6,
**wherein**
the hub (12) and the bearing flange (10) of the chain wheel (2) are arranged in a coaxial configuration one with regard to another.

8. Intermediate wheel according to claims 1 to 7,
**wherein**
the positive-coupling elements (4) of the chain wheel (2) are arranged in a concentric configuration, on the bearing flange (10), around the axis (8) and the hub (12).

9. Intermediate wheel according to claim 8,
**wherein**
the positive-coupling elements (4) are designed as webs arranged in a vertical position with regard to the chain wheel (2) or the bearing flange (10), respectively.

10. Intermediate wheel according to claims 8 and 9,
**wherein**
the top edge (13) of the positive-coupling element (4) is recessed (15) with regard to the top edge (14) of the hub (12).

11. Intermediate wheel according to claims 1 to 10,
**wherein**
the positive-coupling element (4) consists of four webs distributed radially on the bearing flange (10), in a concentric configuration around the axis (8) or the hub (12), respectively.

12. Intermediate wheel according to claims 1 to 11,
**wherein**
the chain wheel (2), the bearing flange (10), the hub (12), and the positive-coupling elements (4), all form one single piece.

13. Intermediate wheel according to claim 12,
**wherein**
the chain wheel (2), the bearing flange (10), the hub (12), and the positive-coupling elements (4), all form one single piece made of plastic.

14. Intermediate wheel according to claim 1,
**wherein**
the counter-cogwheel (3) assumes the form of a hollow body.

15. Intermediate wheel according to claims 1 and 14,
**wherein**
the counter-cogwheel (3), on the side (16) facing the chain wheel (2), presents an opening (18) granting access to the inside of the hollow body (17).

16. Intermediate wheel according to at least one of the claims hereinbefore referred to,
**wherein**
the counter-cogwheel (3) presents an axis (19) that can be coaxially coordinated with regard to the axis (8) of the chain wheel (2).

17. Intermediate wheel according to claims 1, 14 to 16,
**wherein**
a bearing bore (42) is applied to the front side (20), which is the side pointing away from the chain wheel (2), of the counter-cogwheel (3).

18. Intermediate wheel according to claims 1, 14 to 17,
**wherein**
positive-coupling elements (5) are arranged radially inside the hollow space (17) of the counter-cogwheel (3), in a concentric configuration around the axis (19) or the bearing bore (42), respectively.

19. Intermediate wheel according to claim 18,
**wherein**
the positive-coupling elements (5) of the counter-cogwheel (3) are imparted the form of webs arranged at right angle to the front side (20) of the counter-cogwheel (3).

20. Intermediate wheel according to claims 18 and 19,
**wherein**
the top edge (22) of the counter-corgwheel (3) is recessed (41) with regard to the top edge (23) of the positive-coupling elements (5).

21. Intermediate wheel according to at least one of the claims hereinbefore referred to,
**wherein**
the internal edge (24) of the positive-coupling element (5) is in alignment with the internal diameter 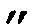 di" of the bearing bore (42) of the counter-cogwheel (3).

22. Intermediate wheel according to at least one of the claims hereinbefore referred to,
**wherein**
the counter-cogwheel (3), the front side (20), and the positive-coupling elements (5), all form one single piece.

23. Intermediate wheel according to claim 22,
**wherein**
the counter-cogwheel (3), the positive-coupling elements (5), and the front side (20), all form one single piece made of plastic.

24. Intermediate wheel according to at least one of claims 1 to 23 hereinbefore referred to,
**wherein**
the positive-coupling elements (5) are defined by four webs arranged radially inside the hollow space (17) of the counter-cogwheel (3).

25. Intermediate wheel according to claims 1 to 24,
**wherein**
the hub (12) of the chain wheel (2) is received by the bearing bore (42) of the counter-cogwheel (3).

26. Intermediate wheel according to claims 1 to 25,
**wherein**
the internal edges (24) of the positive-coupling elements (5) of the counter-cogwheel (3) are designed to act as shells of bushing fitting with the outer peripheral surface (25) of the hub (2) of the chain wheel (2).

27. Intermediate wheel according to claims 1 to 26,
**wherein**
the internal diameter 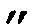 dig" of the counter-cogwheel (3) is designed to act as a shell of bushing fitting with the outer peripheral surface (26) of the bearing flange (10) and with the external edges (27) of the positive-coupling elements (4) of the chain wheel (2).

28. Intermediate wheel according to claims 1 to 27,
**wherein**
the internal edges (24) of the positive-coupling elements (5), together with the inner peripheral surface (28) of the counter-cogwheel (3), are designed to interact with the external edge (27) of the positive-coupling elements (4), as well as with the peripheral surface (26) of the bearing flange (10) and the peripheral surface (25) of the hub (12), to form a friction bearing.

29. Intermediate wheel according to claims 1 to 28,
**wherein**
each of the positive-coupling elements (5) of the counter-cogwheel (3) and the positive-coupling elements (4) of the chain wheel (2) assume a position, with rotational play, inside the chamber (6) formed by two positive-coupling elements (4 or 5).

30. Intermediate wheel according to claim 29,
**wherein**
the chambers (6), by the positive-coupling elements (4 and 5) of the counter-cogwheel (3) and of the chain wheel (2) engaging one with another, are subdivided into several sectional spaces (43) enabling the insertion of damping elements (7).

31. Intermediate wheel according to claims 1 to 30,
**wherein**
the damping element (7) is made of elastic material.

32. Intermediate wheel according to claims 1 to 31,
**wherein**
the damping material (7) is made of compressible material.

33. Intermediate wheel according to claims 1 to 32,
**wherein**
the chain wheel (2), of which said intermediate wheel (1) is constituted, together with the counter-cogwheel (3), are mounted, by their axes (8 and 19), in a coaxial configuration, thus enabling their being pivoted around a common axis (30) attached to the frame sectional member (29) of the accumulation roller conveyor.

34. Intermediate wheel according to claim 33,
**wherein**
the intermediate wheel (1) with its, by the coaxial arrangement of the axes (8 and 19) of the chain wheel (2) and the counter-cogwheel (3), has a pivot-type bearing and receives the axis (30) of the case (31) in a pivotable configuration.

35. Intermediate wheel according to claims 1 to 34,
**wherein**
the chain wheel (2) is constantly in gear with a circulating chain (32).

36. Intermediate wheel according to at least one of claims 1 to 35 hereinbefore referred to,
**wherein**
the function of the hub (12) of the chain wheel (2), which is that of a bearing sleeve, is replaced by a separate bearing bush.

## Revendications

1. Rouleau intermédiaire (1) pour l'entraînement de rouleaux-supports sur des transporteurs d'accumulation à galets destinés au transport et à l'accumulation exempte de pression de marchandises de détail, où le rouleau intermédiaire (1) peut être placé en position d'entraînement ou en roue libre et est constitué d'une roue dentelée (2) et d'une contre-roue dentée (3) qui engrènent dans une roue dentée solidaire du rouleau-support, caractérisé en ce que
la roue dentée (2) constituant le rouleau intermédiaire (1) et la contre-roue dentée (3) sont enfichables coaxialement et présentent des éléments d'engagement positif, correspondant entre eux, qui forment au moins une alvéole (6) permettant de loger au moins un élément amortisseur (7) à jeu primitif et peuvent venir s'emboîter les uns dans les autres.

2. Rouleau intermédiaire selon la revendication 1,
caractérisé en ce que
la roue dentée (2) présente une semelle de palier (10) coaxialement à son axe (8) du côté (9) faisant face à la contre-roue dentée (3).

3. Rouleau intermédiaire selon la revendication 2,
caractérisé en ce que
la semelle de palier (10) est de forme cylindrique et circulaire.

4. Rouleau intermédiaire selon au moins une des revendications 2 et 3,
caractérisé en ce que
le diamètre "d" de la semelle de palier (10) est de dimension inférieure au diamètre "dfk" du cercle de pied (11) de la roue dentée (2).

5. Rouleau intermédiaire selon au moins une des revendications 1 à 4,
caractérisé en ce que
le moyeu (12) de la roue dentée (2) forme le manchon du palier.

6. Rouleau intermédiaire selon la revendication 5,
caractérisé en ce que
le diamètre "dn" du moyeu (12) est de dimension inférieure au diamètre "d" de la semelle de palier (10).

7. Rouleau intermédiaire selon revendications 1 à 6,
caractérisé en ce que
le moyeu (12) et la semelle du palier (10) de la roue dentée (2) sont placés coaxialement l'un par rapport à l'autre.

8. Rouleau intermédiaire selon revendications 1 à 7,
caractérisé en ce que
les éléments d'engagement positif (4) de la roue dentée (2) sont placés de manière concentrique sur la semelle du palier, autour de l'axe (8) et du moyeu (12).

9. Rouleau intermédiaire selon revendication 8,
caractérisé en ce que
les éléments d'engagement positif (4) se présentent sous forme d'ailettes placées verticalement par rapport à la roue dentelée (2) et à la semelle de palier (10).

10. Rouleau intermédiaire selon revendications 8 et 9,
caractérisé en ce qu'il
existe un gradin (15) entre l'arête supérieure (13) de l'élément d'engagement positif (4) et l'arête supérieure (14) du moyeu (12).

11. Rouleau intermédiaire selon revendications 1 à 10,
caractérisé en ce que
les éléments d'engagement positif sont constitués par quatre ailettes placées de manière concentrique autour de l'axe (8) et du moyeu (12) sur la semelle de palier (10).

12. Rouleau intermédiaire selon revendications 1 à 11,
caractérisé en ce que
la roue dentée (2), la semelle de palier (10), le moyeu (12) et les éléments d'engagement positif (4) constituent un seul bloc.

13. Rouleau intermédiaire selon revendication 12,
caractérisé en ce que
la roue dentée (2), la semelle de palier (10), le moyeu (12) et les éléments d'engagement positif (4) constituent un seul bloc en plastique.

14. Rouleau intermédiaire selon revendication 1,
caractérisé en ce que
la contre-roue dentée (3) est constituée par un corps creux.

15. Rouleau intermédiaire selon revendications 1 et 14,
caractérisé en ce que
la contre-roue dentée (3) présente, du côté (16) faisant face à la roue dentelée (2), une ouverture (18) communiquant avec l'espace vide (17).

16. Rouleau intermédiaire selon au moins une des revendications ci-dessus,
caractérisé en ce que
la contre-roue dentée (3) présente un axe (19) qui correspond coaxialement à l'axe (8) de la roue dentée (2).

17. Rouleau intermédiaire selon revendications 1, 14 à 16,
caractérisé en ce que
l'extrémité (20) de la contre-roue dentée (3) faisant face à la roue dentée (2) présente un alésage de roulement (42).

18. Rouleau intermédiaire selon revendications 1, 14 à 17,
caractérisé en ce que,
à l'intérieur de l'espace vide (17) de la contre-roue dentée (3), des éléments d'engagement positif (5) sont disposés de manière concentrique autour de l'axe (19) et de l'alésage de roulement (42).

19. Rouleau intermédiaire selon revendication 18,
caractérisé en ce que
les éléments d'engagement positif (5) de la contre-roue dentée (3) sont constitués par des ailettes placées verticalement par rapport à la face avant (20) de la contre-roue dentée (3).

20. Rouleau intermédiaire selon revendications 18 et 19,
caractérisé en ce qu'il
existe un gradin (41) entre l'arête supérieure (22) de la contre-roue dentée (3) et l'arête supérieure (23) des éléments d'engagement positif (5).

21. Rouleau intermédiaire selon au moins une des revendications ci-dessus,
caractérisé en ce que
l'arête intérieure (24) de l'élément d'engagement positif (5) est dans l'alignement du diamètre intérieur "di" de l'alésage de roulement (42) de la contre-roue dentée (3).

22. Rouleau intermédiaire selon au moins une des revendications ci-dessus,
caractérisé en ce que
la contre-roue dentée (3) constitue un seul bloc avec la face avant (20) et les éléments d'engagement positif (5).

23. Rouleau intermédiaire selon revendication 22,
caractérisé en ce que
la contre-roue dentée (3) constitue un seul bloc en plastique avec les éléments d'engagement positif (5) et la face avant (20).

24. Rouleau intermédiaire selon au moins une des revendications 1 à 23,
caractérisé en ce que
quatre ailettes placées radialement dans l'espace vide (17) de la contre-roue dentée (3) servent d'éléments d'engagement positif (5).

25. Rouleau intermédiaire selon revendications 1 à 24,
caractérisé en ce que
le moyeu (12) de la contre-roue dentée (2) vient se placer à l'intérieur de l'alésage de roulement (42) de la contre-roue dentée (3).

26. Rouleau intermédiaire selon revendications 1 à 25,
caractérisé en ce que
les arêtes intérieures (24) des éléments d'engagement positif (5) de la contre-roue dentée (3) correspondent, en tant que composants de la coquille du coussinet, à la circonférence extérieure (25) du moyeu (12) de la roue dentelée (2).

27. Rouleau intermédiaire selon revendications 1 à 26,
caractérisé en ce que
le diamètre interne "dig" de la contre-roue dentée (3) correspond, en tant que coquille du coussinet, à la circonférence extérieure (26) de la semelle du palier (10) et aux arêtes extérieures (27) des éléments d'engagement positif (4) de la roue dentée (2).

28. Rouleau intermédiaire selon revendications 1 à 27,
caractérisé en ce que
les arêtes internes (24) des éléments d'engagement positif (5) et la circonférence intérieure (28) de la contre-roue dentée (3) constituent, avec l'arête extérieure (27) des éléments d'engagement positif (4), la circonférence (26) de la semelle du palier (10) et la circonférence (25) du moyeu (12), un palier à glissement.

29. Rouleau intermédiaire selon revendications 1 à 28,
caractérisé en ce que
les éléments d'engagement positif (5) de la contre-roue dentée (3) et les éléments d'engagement positif (4) de la roue dentelée (2) viennent s'emboîter avec un jeu primitif dans l'alvéole (6) existant entre deux éléments d'engagement positif (4 ou 5).

30. Rouleau intermédiaire selon la revendication 29,
caractérisé en ce que
en ce que les les alvéoles (6) sont divisées en espaces (43) adaptés pour la réception d'éléments amortisseurs (7) grâce aux éléments d'engagement positif (4 ou 5) de la contre-roue denté (3) et de la roue dentelée (2) qui s'emboîtent les uns dans les autres.

31. Rouleau intermédiaire selon revendications 1 à 30,
caractérisé en ce que
l'élément amortisseur (7) est en matériau élastique.

32. Rouleau intermédiaire selon revendications 1 à 31,
caractérisé en ce que
le matériel amortisseur (7) est en matériau compressible.

33. Rouleau intermédiaire selon revendications 1 à 32,
caractérisé en ce que
la roue dentée (2) et la contre-roue-dentée (3) et leurs axes (8 et 19) - qui constituent le rouleau intermédiaire (1) - sont montées de manière coaxiale et peuvent pivoter autour d'un axe commun (30) fixé sur le profilé du châssis (29).

34. Rouleau intermédiaire selon revendications 33,
caractérisé en ce que
le rouleau intermédiaire (1) peut pivoter à l'intérieur d'un logement (31) avec ses axes (8 et 19) coaxiaux appartenant à la roue dentée (2) et la contre-roue dentée (3) et reçoit de manière mobile l'axe (30) du logement (31).

35. Rouleau intermédiaire selon revendications 1 à 34,
caractérisé en ce que
la roue dentée (2) engrène en permanence une chaîne en mouvement (32).

36. Rouleau intermédiaire selon au moins une des revendications 1 à 35,
caractérisé en ce que
la fonction de manchon du moyeu (12) de la roue dentée (2) est remplacée par un coussinet séparé.
